# EUROPEAN PATENT APPLICATION

(11) **EP 2 532 915 A1**
(43) Date of publication of application: **12.12.2012**
(21) Application number: 11739797.6
(22) Date of filing: 02.02.2011
(51) Int. Cl.: F16D 65/18, F16H 1/16

(54) **DISK BRAKE DEVICE EQUIPPED WITH ELECTRIC PARKING MECHANISM**

(30) Priority: 03.02.2010 JP 2010021875
(71) Applicant: Akebono Brake Industry Co., Ltd., Tokyo 103-8534 (JP)
(72) Inventor: TAKAHASHI, Kimio, Tokyo 103-8534 (JP)
(74) Representative: Grünecker, Kinkeldey, Stockmair & Schwanhäusser
(86) International application number: PCT/JP2011/052176
(87) International publication number: WO 2011/096449

(57) **Abstract**

A disc brake apparatus with an electric parking mechanism includes an electric motor, a worm reduction gear and a thrust generation mechanism. A worm wheel of this worm reduction gear is supported on part of a rotational member which makes up the thrust generation mechanism concentrically with the rotational member and so as to rotate together with the rotational member. A worm of the worm reduction gear has worm teeth which are provided on part of the worm in an axial direction and is supported rotatably inside a casing of the worm reduction gear in such a state that the worm teeth are in mesh engagement with the worm wheel. In order to enable the transmission of a rotational force of an output of the electric motor to the worm, a drive side gearwheel and a driven side gearwheel are caused to mesh with each other directly or by way of another gearwheel. The drive side gearwheel is provided on the output shaft of the electric motor concentrically with this output shaft and so as to rotate together therewith. The driven side gearwheel is provided on part of the worm concentrically with the worm and so as to rotate together therewith.

## Description

### Technical Field

The present invention is related to an improvement in a disc brake apparatus with an electric parking mechanism in which a braking force is generated using an electric motor as a drive source and moreover, the braking force can be kept applied even after the energization to the electric motor is stopped.

### Background Art

Conventionally, as electric disc brakes, there have been proposed various types of electric disc brakes having a construction in which an output of an electric motor is inputted into a booster mechanism, the rotational movement of the electric motor is converted into linear movement while being boosted by the booster mechanism, and a pair of pads are pressed strongly against both sides of a rotor.

Additionally, there also conventionally have been known various types of electric disc brake apparatuses in which an electric parking mechanism in which a braking force can be kept applied even after the energization to an electric motor is stopped is incorporated in addition to a hydraulic or electric service brake.

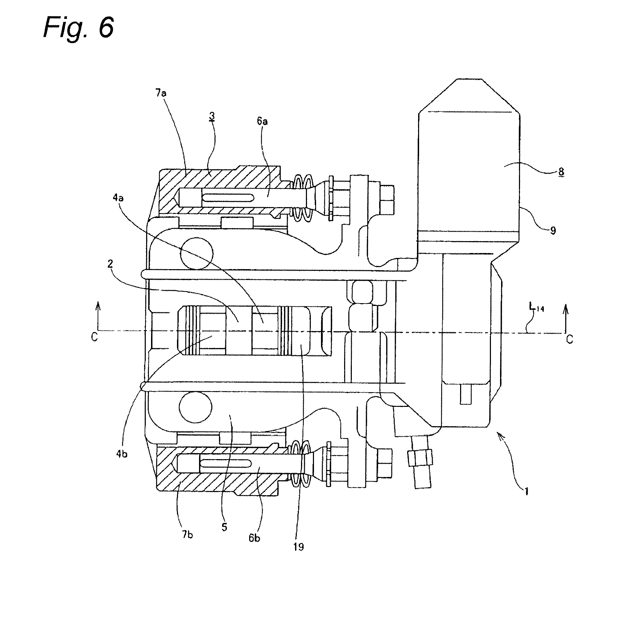

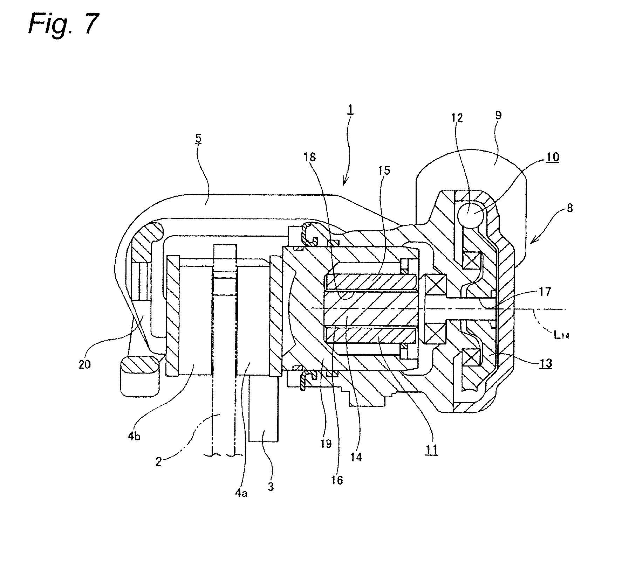

Figs. 6, 7 show a construction of a disc brake apparatus with an electric parking mechanism which is described in PTL 1. This conventional construction will briefly be described.

In a disc brake apparatus 1 with an electric parking mechanism, both inner and outer pads 4a, 4b and a caliper 5 are supported so as to be displaced in an axial direction on a support 3 which is fixed to a vehicle body so as to be disposed adjacent to a rotor 2 which rotates together with a wheel. The support 3 is fixed to a constituent member of a suspension system such as a knuckle or the like. Because of this, in the example shown in the figures, a pair of guide pins 6a, 6a which are fixedly supported on the caliper 5 at their proximal end portions are supported by being brought into engagement with guide holes in a pair of guide cylindrical portions 7a, 7b which are provided at both side portions of the support 3 in a rotating direction of the rotor 2. Further, an electric thrusting unit 8 is provided which makes up the electric parking mechanism. It should be noted that in this specification and claims, an inner side means a central side of the vehicle body in a width direction and an outer side means an outer side of the vehicle body in the same direction.

This electric thrusting unit 8 includes an electric motor 9, a worm reduction gear 10, and a feed screw mechanism 11. In these constituent components, the worm reduction gear 10 is such that a worm 12 which is supported and fixed to an output shaft, not shown, of the electric motor 9 concentrically and so as to rotate together therewith and a worm wheel 13 are caused to mesh with each other.

Additionally, the feed screw mechanism 11 is made up of a drive spindle 14 and a nut 15.

In these constituent components, the drive spindle 14 has an external thread portion 16 which is formed from a middle portion to a left end portion as seen in Fig. 7 on an outer circumferential surface and is supported and fixed in a support hole 17 formed in the center of the worm wheel 13 so as to be coaxial with an axis of the worm wheel 13 and so as to rotate together therewith at the other right end portion thereof.

Additionally, the nut 15 has an internal thread portion 18 which is formed on an inner circumferential surface thereof, and an edge of a left distal end of the nut 15 as seen in Fig. 7 is caused to face an inner side of a piston 19 of the caliper 5.

When actuating an electric parking brake assembly of the disc brake apparatus 1 with an electric parking mechanism that is configured as has been described above to hold the stopped state of the vehicle, a control current is supplied to the electric motor 9 based on the operation of a switch or the like by the driver to thereby rotate the output shaft of the electric motor 9. This rotational movement is transmitted to the drive spindle 14 by way of the worm 12 and the worm wheel 13 which make up the worm reduction gear 10 while being reduced in speed at a predetermined reduction gear ratio. Then, the rotational movement transmitted to the drive spindle 14 is converted into linear movement which displaces the nut 15 towards the rotor 2 by a fitting engagement of the external thread portion 16 of the drive spindle 14 with the internal thread portion 18 of the nut 15. Further, this linear movement of the nut 15 displaces the piston 19 of the caliper 5 towards the rotor 2, whereby of the pair of the brake pads 4a, 4b, the inner pad 4a is pressed against an inner surface of the rotor 2. Then, as a reaction of this pressing force, a caliper claw 20 of the caliper 5 presses the outer pad 4b against an outer surface of the rotor 2.

By making the construction of the worm reduction gear 10 into a construction having a self-locking function in which the rotation is prevented from being transmitted from the worm wheel 13 to the worm 12, even after the energization to the electric motor 9 is stopped, both the pads 4a, 4b can be kept pressed against the rotor 2.

Additionally, when the brake is released, by rotating the electric motor 9 reversely, the piston 19 is displaced in a direction in which it moves away from the rotor 2, whereby both the pads 4a, 4b are caused to move away from the rotor 2.

In the case of the disc brake apparatus 1 with an electric parking mechanism that is configured as has been described above, the electric motor 9 and the worm 12 which makes up the worm reduction gear 10 are disposed coaxially. Namely, the electric motor 9 and the worm 12 which makes up the worm reduction gear 10 are disposed in series with each other with respect to the axial direction. Because of this, the axial dimension of the electric motor 9 and the worm 12 is expanded relative to the caliper 5, whereby the position of the electric motor 9 is superposed on an axial position of the guide pin 6a which is one of the pair of guide pins 6a, 6b. When the guide pin 6a and the electric motor 9 are disposed in such a superposed position, the guide pin 6a cannot be removed unless the electric motor 9 is removed, which prevents attaching or detaching work of both the pads 4a, 4b from being carried out. Because of this, the working efficiency of repair, maintenance or assemblage of pads to a vehicle is reduced. Additionally, the layout properties in relation to the positional relationship between the guide pin 6a and the electric motor 9 are deteriorated.

In addition, the electric motor 9 is disposed eccentrically in one direction with respect to an axis L₁₄ of the drive spindle 14. Because of this, a rotational moment is applied to the electric motor 9 around the axis L₁₄ based on vibrations during operation and/or its own weight. This rotational moment makes the behavior of the caliper 5 unstable, possibly causing vibration, noise or abnormal wear of both the pads 4a, 4b. Additionally, in disc brake apparatuss with an electric parking mechanism which are described in PTLs 2 to 3, too, a construction is adopted in which an electric motor and a worm are disposed in a series relationship, and therefore, the same problem as that of PTL 1 is considered.

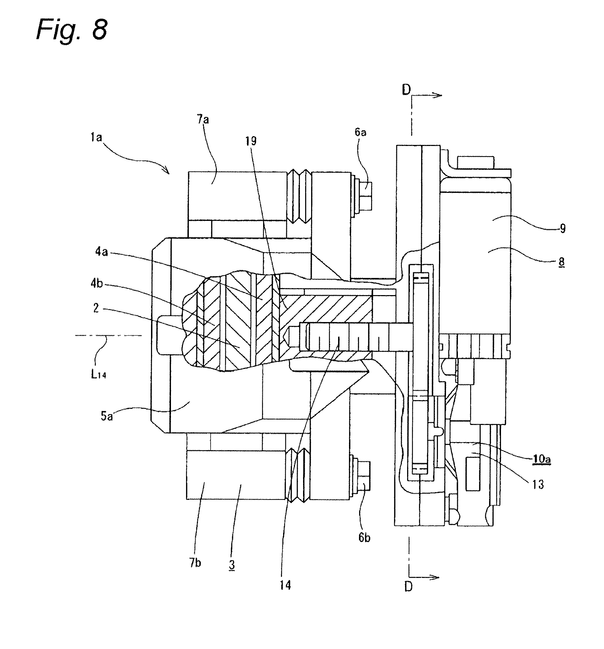

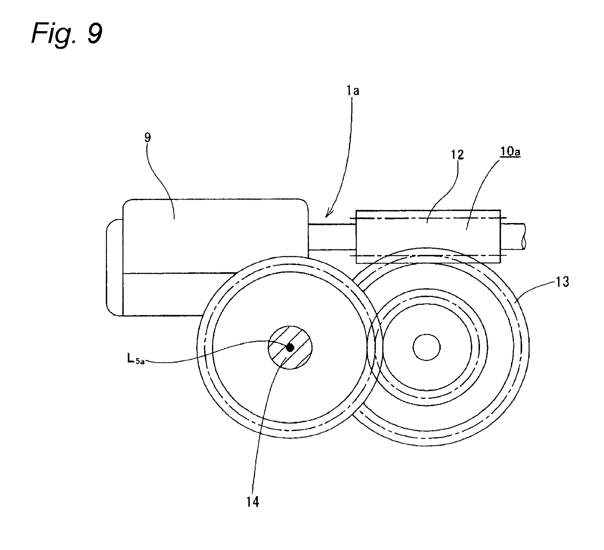

In addition, PTL 1 also describes a disc brake apparatus 1a with an electric parking mechanism which has a construction shown in Figs. 8 to 9. In this disc brake apparatus 1a with an electric parking mechanism, as with the disc brake apparatus 1 with an electric parking mechanism which is illustrated in Figs. 6 to 7, an electric motor 9 and a worm 12 which makes up a worm reduction gear 10a are disposed in series with each other in an axial direction. However, the position of the center of gravity of the electric motor 9 and the worm reduction gear 10a is made to be disposed so as to be disposed on or near an axis L₁₄ of a drive spindle 14 by disposing the electric motor 9 and the worm reduction gear 10a in opposite positions with respect to the axis L₁₄.

According to this construction, the rotational moment that is applied to a caliper 5a based on the eccentricity in position of the center of gravity of the electric motor can be prevented from being generated or can be reduced to a low level. However, as shown in Fig. 8, the electric motor 9 and the worm reduction gear 10a are disposed in such positions as to be superposed on axial positions of a pair of guide pins 6a, 6b. Because of this, the problems with the reduction in working efficiency and the deterioration in layout properties cannot be solved.

### Citation List

### [Patent Literature]

PTL 1: JP-A-2002-89598
PTL 2: JP-A-2006-283811
PTL 3: JP-A-2006-283887

### Summary of Invention

### Technical Problem

One of advantages of the invention is to provide a disc brake apparatus with an electric parking mechanism which can improve the working efficiency of repair, maintenance and assemblage thereof to a vehicle by devising the disposition of an electric motor of an electric thrusting unit and a worm reduction gear and which can further prevent the generation of vibration, noise or abnormal wear of pads and a rotor by preventing the generation of rotational moment based on the eccentricity in position of the center of gravity of the electric motor.

### Solution to Problem

According to an aspect of the invention, there is provided an electric thrusting unit for a disc brake with an electric parking mechanism, comprising:
an electric motor;
a worm reduction gear including a worm and a worm wheel which are meshed with each other; and
a thrust generation mechanism for converting rotational movement transmitted by way of the worm reduction gear into linear movement, wherein
the worm wheel is supported on a part of a rotational member of the thrust generation mechanism concentrically with the rotational member so as to rotate together with the rotational member,
the worm, includesworm teeth which are provided on part thereof in an axial direction, and is supported rotatably inside a casing for the worm reduction gear in a state where the worm teeth are meshed with the worm wheel,
a drive side gearwheel and a driven side gearwheel are brought into meshing engagement with an output shaft of the electric motor directly or by way of an additional gearwheel so as to transmit a rotational force of the output shaft of the electric motor to the worm,
the drive side gearwheel is provided concentrically with the output shaft and so as to rotate together therewith, and
the driven side gearwheel is provided on a part of the worm concentrically with the worm and so as to rotate together therewith.

The electric thrusting unit for a disc brake apparatus with an electric parking mechanism may be configured so that:
an axis of the output shaft of the electric motor is parallel to an axis of the worm, and
the axis of the output shaft of the electric motor and the axis of the worm exist on a plane which is orthogonal to an axis of the rotational member of the thrust generation mechanism.

The electric thrusting unit for a disc brake apparatus with an electric parking mechanism may be configured so that:
the worm reduction gear is lubricated with a grease, and
a lead angle of the worm teeth of the worm is in a range from 1.5 to 3 degrees.

According the other aspect of the invention, there is provided a disc brake apparatus with an electric parking mechanism, comprising:
a rotor which rotates together with a wheel;
a support member which is supported on a portion that does not rotate in a state wherein the support member is disposed adjacent to the rotor;
a pair of pads which are disposed on both sides of the rotor in an axial direction and which are supported by the support member so as to be moved towards and away from the rotor; and
the electric thrusting unit according to any one of claims 1 to 3, which moves the pair of pads in a direction toward the rotor.

### Advantageous Effects of Invention

In the case of the electric thrusting unit for a disc brake apparatus with an electric parking mechanism that is configured as has been described above, the axis of the output shaft of the electric motor and the axis of the worm are parallel and both the axes exist on the imaginary planes which are different from each other and which exist in the direction which is orthogonal to the axis of the rotational member which makes up the thrust generation mechanism. Moreover, the axial position of the axis of the output shaft and the axial direction of the axis of the worm are disposed so as to be superposed on each other when seen in the axial direction of the axis of the rotational member. Thus, the axial dimension of the electric motor and the worm relative to a caliper of the brake system can be made small. Because of this, there is caused no such situation that the electric motor and the worm reduction gear are superposed on the axial positions of guide pins of the disc type electric parking brake system, thereby making it possible not only to improve the working efficiency of repair, maintenance and assemblage of the electric thrusting unit to a vehicle but also to improve the layout properties thereof.

Additionally, since the electric motor and the worm can be disposed parallel, the degree of freedom in disposing the electric motor with respect to a radial direction of the worm can be enhanced. Because of this, the layout properties to avoid the interference with a peripheral component such a wheel are high. In addition, the casing of the electric motor can be commonized for cylinders of different sizes.

In addition, by disposing the electric motor in such a state that the motor straddles the axis of the rotational member which makes up the thrust generation mechanism, the center of gravity of the electric motor can be disposed on or near the axis of the rotational member. More specifically, an imaginary plane which is orthogonal to the axis of the electric motor and the axis of the rotational member are made to coincide with each other at the position of the center of gravity or the deviation in position between them is suppressed to a minute level. Because of this, the rotational moment that is generated around the axis based on vibration during operation or its own weight can be prevented from being applied to the electric motor and the support portion of the electric motor or the application of the rotational moment to the electric motor and the support portion thereof can be reduced.

Further, by disposing the electric motor above a cylinder portion of the caliper, the position of the center of gravity of the whole brake system can be disposed towards the rotor. Because of this, the rotational moment applied to the support portion of the brake system can be reduced, and hence, it is possible to prevent the generation of rattling noise, dragging due to the deterioration in slidability of the guide pins and abnormal wear of the brake pads.

### Brief Description of Drawings

Fig. 1 is a sectional view taken along the line A-A in Fig. 3 which shows a disc brake apparatus with an electric parking mechanism according to a first embodiment of the invention.
Fig. 2 shows a perspective view of the disc brake apparatus with an electric parking mechanism as seen from thereabove in a left half portion and a sectional view of the disc brake apparatus with an electric parking mechanism which is taken along the line B-B in Fig. 1 in a right half portion.
Fig. 3 is a front projection view of the disc brake apparatus with an electric parking mechanism shown in Fig. 1 as seen from a right-hand side thereof.
Fig. 4 is a partially sectional view of the disc brake apparatus with an electric parking mechanism shown in Fig. 1 as seen in the same direction as that in which Fig. 1 is seen.
Fig. 5 is a diagram similar to Fig. 1 which shows a disc brake apparatus with an electric parking mechanism according to a second embodiment of the invention.
Fig. 6 is a front projection view of a disc brake apparatus with an electric parking mechanism as seen from a radially external portion with parts thereof sectioned, which shows a first example of a conventional construction.
Fig. 7 is a sectional view taken along the line C-C in Fig. 6.
Fig. 8 is a similar view to that shown in Fig. 6 with a worm omitted, which shows a second example of a conventional construction.
Fig. 9 is a sectional view taken along the line D-D in Fig. 8.

### Description of Embodiments

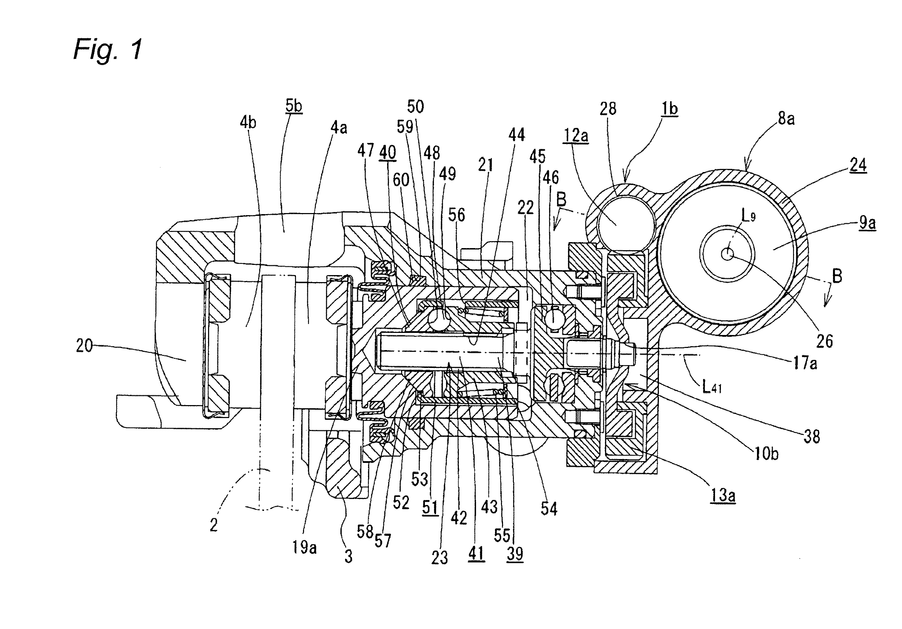

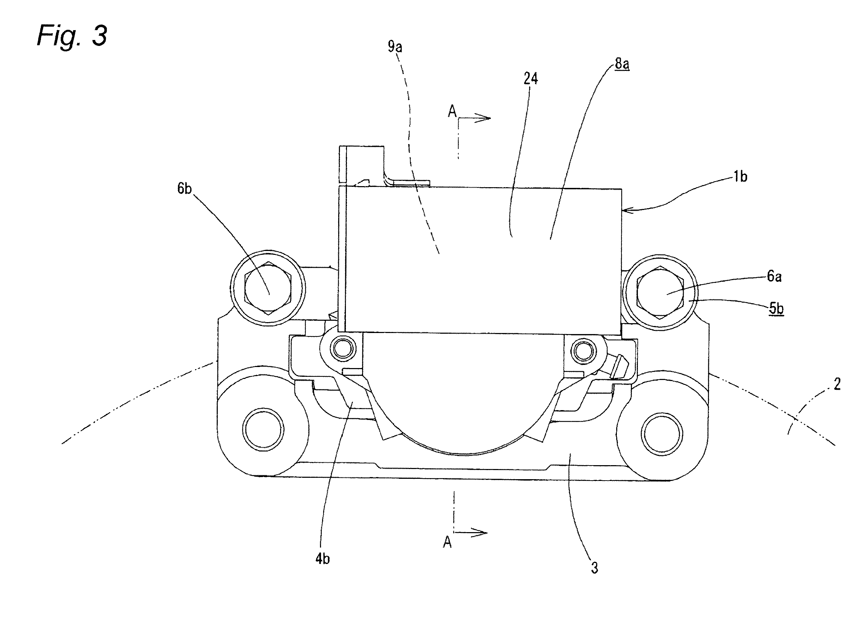

Figs. 1 to 4 show a first embodiment of the invention. This embodiment illustrates a construction in which the invention is applied to a floating caliper type disc brake apparatus in which a service brake for slowing or stopping a running vehicle is operated hydraulically and a parking brake for holding the vehicle in a stopped state is operated electrically. The construction of a hydraulic service brake system and a basic construction of a parking brake system like those described above are described in PTL 1, and therefore they will briefly be described here.

In a disc brake apparatus 1b with an electric parking mechanism of a first embodiment, a pair of pads 4a, 4b and a caliper 5b are supported so as to be displaced in an axial direction on a support 3 which is fixed to a vehicle body so as to be disposed adjacent to a rotor 2 which rotates together with a wheel. Because of this, in the embodiment shown in the figures, as with the conventional constructions shown in Figs. 6 to 9, a pair of guide pins 6a, 6a which are fixedly supported on the caliper 5b at their proximal end portions are supported by being brought into engagement with guide holes in a pair of guide cylindrical portions 7a, 7b which are provided at both side portions of the support 3 in a rotating direction of the rotor 2. Further, an electric thrusting unit 8a is provided which makes up the parking brake mechanism.

In these constituent components, both the inner and outer pads 4a, 4b are provided so as to hold the rotor 2 from both sides in an axial direction.

Additionally, the caliper 5b has a caliper claw 20 which is provided at an outer end portion and a cylinder portion 21 which is provided at an inner half portion. Additionally, a piston 19a is fittingly installed within a cylinder space 22 which is provided in an interior of the cylinder portion 21 while being opened towards the rotor 2 so as to be displaced in an axial direction and in a fluid-tight fashion.

In addition, the electric thrusting unit 8a includes an electric motor 9a which is a drive source, a worm reduction gear 10b and a thrust generation mechanism 23 for converting rotational movement into linear movement.

In these constituent components, the electric motor 9a is disposed within a motor space 25 in a casing 24 which is fixed to an inner end portion of the caliper 5b so that an axis Lg of the electric motor 9a exists on an imaginary plane which exists in a direction which is orthogonal to an axis L₄₁ of a drive spindle 41 which is a rotational member which makes up the thrust generation mechanism 23. Additionally, a drive side gearwheel 27, which is a spur gear, is fitted on and fixed to (through spline engagement) a distal end portion of an output shaft 26 of the electric motor 9a so as not only to be concentric with but also to rotate together with the output shaft 26.

In addition, as a lubrication method of the worm reduction gear 10b, the worm reduction gear 10b is lubricated with a grease, and the worm reduction gear 10b is made up of a worm 12a which is made of an iron based alloy and a worm wheel 13a which is made of a similar iron based alloy, the worm 12a and the worm wheel 13a being caused to mesh with each other. Additionally, the worm 12a and the worm wheel 13a can be made of a metal such as a copper based alloy, or a polyamide resin or a synthetic resin such as polyacetal in addition to the iron based alloy.

In these constituent components, the worm 12a has worm teeth 28 which are provided at an axial middle portion of an outer circumferential surface thereof. In these worm teeth 28, a lead angle which is an angle formed by a worm teeth 28 and an imaginary plane which exists in a direction which is orthogonal to an axis L₁₂ of the worm 12a is set to be in the range of 1.5 to 3 degrees. This angle ranging from 1.5 to 3 degrees is adjusted as required according to materials used for the worm wheel 13a and the worm 12a. The angle may be close to three degrees in the case of an iron based alloy having a relatively large friction coefficient being used. However, in the case of a copper based alloy having a relatively small friction coefficient or a synthetic resin being used, the angle is set to be close to 1.5 degrees.

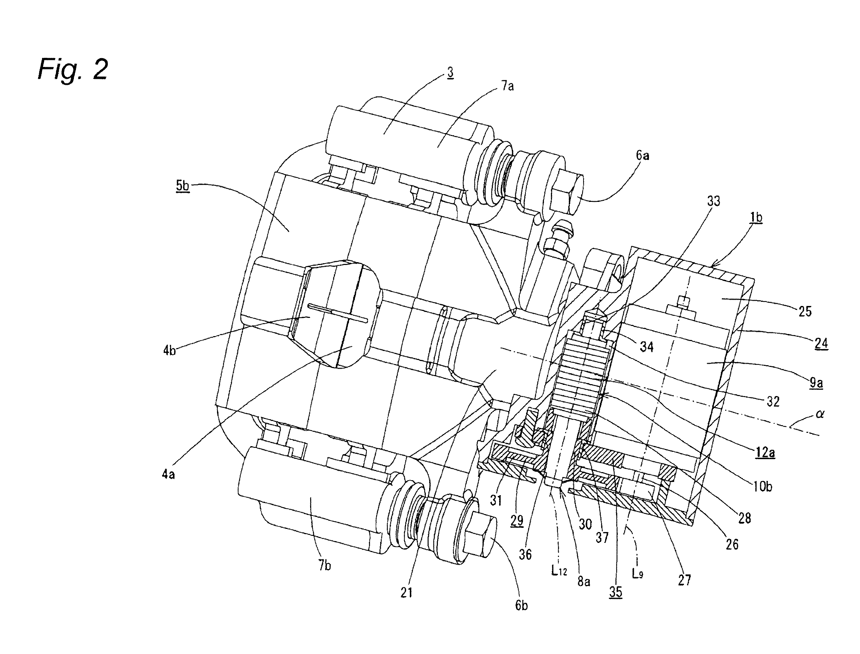

Additionally, a driven side gearwheel 29 which meshes with the drive side gearwheel 27 is fitted on and fixed to (through spline engagement) an axial end portion of the outer circumferential surface of the worm 12a concentrically with the worm 12a and so as to rotate together therewith. This driven side gearwheel 29 is made up of a cylindrical portion 30 and a gearwheel portion 31 which is provided integrally at a lower end portion of an outer circumferential surface of the cylindrical portion 30 as seen in Fig. 2.

In the worm 12a configured in the way described above, one end portion is supported rotatably via a sleeve 34 which is a slide bearing in a support hole 33 formed in an inner circumferential surface of a worm space 32 defined in the casing 24. Additionally, a portion of the axial middle portion of the worm 12a which lies close to the other end portion is supported rotatably relative to a support hole 36 formed in a lid member 35 which closes an opening portion of the worm space 32 via the cylindrical portion 30 of the driven side gearwheel and a sleeve 37 which is a slide bearing. In this way, the worm 12a is supported within the worm space 32 in such a state that the axis L₁₂ of the worm 12a is parallel to the axis L₉ of the electric motor 9a and so as to rotate relative to the casing 24.

In addition, the worm wheel 13a is fitted on and fixed to a proximal end portion, which is a right end portion as seen in Figs. 1, 2, of the drive spindle 41 which makes up the thrust generation mechanism 23 at a support hole 17a which is provided in a central portion of the worm wheel 13a, whereby the worm wheel 13a is supported within a worm space 38 in the casing 24 concentrically with the spindle 41 and so as to rotate together therewith.

Additionally, the thrust generation mechanism 23 is made up of a combination of a feed screw mechanism 39 and a ball ramp mechanism 40.

In these constituent components, the feed screw mechanism 39 is made up by bringing a threaded hole 44 which is provided at a central portion of a drive side rotor 43 which makes up the ball ramp mechanism 40 into mesh engagement with the drive spindle 41 and an external thread portion 42 which is provided on an outer half portion (a left half portion as seen in Fig. 2) of the drive spindle 41.

In addition, a radially outwardly expanding flange-like collar portion 45 is formed at an axial middle portion of the drive spindle 41 which makes up the feed screw mechanism 39 which is configured in the way described above, and an inner surface of the collar portion 45 is rotatably supported by a thrust rolling bearing 46. By adopting this configuration, the drive spindle 41 is assembled rotatably at a deep end portion (an inner end portion) of the cylinder space 22 in the caliper 5b while bearing an inwardly directed thrust load.

Additionally, the ball ramp mechanism 40 includes the drive side rotor 43, a driven side rotor 47 and a plurality of balls 48. Drive side ramp portions 49 and driven side ramp portions 50 which are shaped into an arc-like shape as seen in the axial direction are provided in a plurality of circumferential locations on facing surfaces of both the rotors 43, 47, respectively. For example, the drive side ramp potions 49 and the driven side ramp portions 50 are each provided in 3 to 4 locations, for example.

Axial depths of the ramp portions 49, 50 vary gradually with respect to the circumferential direction, however, directions in which the axial depths of the drive side ramp portions 49 and the driven side ramp portions 50 are opposite to each other. Consequently, when both the rotors 43, 47 are rotated relative to each other and the balls 48 are caused to roll along the ramp portions 49, 50, a space between both the rotors 43, 47 is expanded by a large force.

The ball ramp mechanism 40 configured in the way described above is disposed inside a case 51 which is loosely fitted in a bore in the piston 19a. In this state, a bent portion 52 of the case 51 which is formed by bending one end portion, which is a left end portion as seen in Fig. 1, of the case 51 radially inwards is brought into engagement with a locking step portion 53 which is formed at an outer end portion of an outer circumferential edge of the driven side rotor 47. Additionally, a biasing spring 55 is provided between an inner surface of a distal end portion, which is a left end portion as seen in Fig. 1, of the drive side rotor 43 and a ring member 54 which is fixed to a portion of an inner circumferential surface of the case 51 which lies close to an inner end thereof. This biasing spring 55 imparts an elastic force in an opposite direction to a rotating direction of the drive side rotor 43 when in operation (when a braking force is generated) and an elastic force towards the outer side to the drive side rotor 43.

In addition, a cutout 56 is formed in a circumferential position on a middle portion of the case 51 so as to penetrate the case 51 from an outer circumferential surface to an inner circumferential surface thereof. The cutout 56 is formed in the middle portion of the case 51 in a range, for example, of 120 to 180 degrees in the circumferential direction. Then, a locking portion (whose illustration is omitted) provided on part of an outer circumferential surface of the distal end portion of the drive side rotor 43 is brought into engagement with this cutout 56. An excessive rotation of the drive side rotor 43 which is, for example, equal to or over the range of 120 to 180 degrees is prevented by the construction described above.

Additionally, a rotor side inclined surface 57 which is formed on an outer circumferential surface of a distal end portion of the driven side rotor 47 so as to project towards the outer side from the case 51 while being inclined in a direction in which an outside diameter thereof is reduced as it extends towards the outer side is caused to face a partially conically depressed bearing surface 58 which is formed at an axial middle portion of an inner circumferential surface of the piston 19a so as to be inclined in the same direction and at the same angle as those of the rotor side inclined surface 57. Then, the rotation of the driven side rotor 47 is prevented by virtue of a wedge effect based on an abutment of both the surfaces 57, 58 with each other.

The construction and function of the thrust generation mechanism 23 that is configured in the way described above are basically similar to the conventionally widely known one. However, when carrying out the invention, the construction of the thrust generation mechanism is not limited to the construction in which the feed screw mechanism and the ball ramp mechanism are combined as shown in the figures, and hence, it is possible to adopt various mechanical booster mechanisms such as a cam and roller mechanism in which a force in a rotating direction is converted into an axial force while being boosted.

In the disc brake apparatus 1b with an electric parking mechanism of this embodiment that is configured as has been described heretofore, when a service brake unit for slowing or stopping the running vehicle is activated, brake fluid is sent under pressure into the cylinder portion 21 in the caliper 5b, so that a lining of the inner pad 4a is pressed against the inner surface of the rotor 2 from right to left as seen in Fig. 1 by the piston 19a based on the operation of a brake pedal by the driver. Then, as a reaction of this pressing force, the caliper 5b is displaced rightwards as seen in Fig. 1 based on the sliding of both the guide pins 6a, 6b and the guide holes in both the guide cylindrical portions 7a, 7b, whereby the caliper claw 20 of the caliper 5b presses a lining of the outer pad 4b against the outer surface of the rotor. As a result of this, the rotor 2 is held strongly by both the linings on both the inner and outer surfaces from both the sides thereof, whereby the brake is applied.

In addition, in the case of the construction of this embodiment, an adjustment function to maintain a gap between the linings of both the pads 4a, 4b and the rotor 2 at an appropriate value when no brake is applied irrespective of the wear of both the pads 4a, 4b is, as with a conventionally known adjustment function, realized by an action based on an elastic deformation of a fluid tightness holding oil ring 60 which is installed in a locking groove 59 which is provided on the inner circumferential surface of the cylinder portion 21 of the caliper 5b and sliding between an inner circumferential surface of the oil ring 60 and an outer circumferential surface of the piston 19a.

Additionally, in the disc brake apparatus 1b with an electric parking mechanism, when an electric parking brake unit for holding the vehicle in a stopped state is activated, by energizing the electric motor 9a, the output shaft 26 of the electric motor 9a is rotated. The rotational movement of the output shaft 26 is transmitted to the worm 12a of the worm reduction gear 10b by way of the drive side gearwheel 27 and the driven side gearwheel 29. Further, the rotational movement of the worm 12a is transmitted to the drive spindle 41 of the feed screw mechanism 39 which makes up the thrust generation mechanism 23 by way of the worm wheel 13a to thereby drive and rotate the drive spindle 41.

In an initial stage of this rotational driving, the drive side rotor 43 does not rotate by virtue of frictional resistance occurring between both the surfaces 57, 58 and the resistance of the biasing spring 55. Then, the drive side rotor 43 is displaced in parallel towards the distal end of the drive spindle 41 together with the driven rotor 47, that is, moves towards the rotor 2 without any rotation based on the thread engagement between the external thread portion 42 of the drive spindle 41 and the threaded hole 44 of the drive side rotor 43. By this translation of the drive side rotor 43 together with the driven side rotor 47, the piston 19a is pushed out towards the outer side, whereby the gaps between both the axial side surfaces of the rotor 2 and the inner pad 4a and the outer pad 4b are reduced. During the translation described above, the balls 48 stay at deepest end portions of the ramp portions 49, 50.

When spaces in the respective portions are lost, increasing the resistance against any further movement of the drive side and driven side rotors 43, 47 towards the rotor 2 as a result of the translation of the drive side rotor 43 together with the driven side rotor 47, of both the rotors, the drive side rotor 43 rotates together with the drive spindle 41, whereby the drive side rotor 43 and the driven side rotor 47 rotate relative to each other. Then, the balls 48 move rollingly to shallow portions in the ramp portions 49, 50, whereby the space between both the rotors 43, 47 is expanded. Since the inclination angles of the ramp portions 49, 50 are moderate, the force acting to expand the space between the rotors 43, 47 is increased, and hence, both the inner and outer pads 4a, 4b are pressed against both the side surfaces of the rotor 2 with a large force by the piston 19a and the caliper claw 20, whereby the brake is applied.

The magnitude of the braking force is controlled by controlling the torque inputted from the output shaft 26 into the thrust generation mechanism 23 by way of the worm reduction gear 10b by regulating the amount of energization to the electric motor 9a.

Additionally, the control of the force with which both the inner and outer pads 4a, 4b are pressed against both the side surfaces of the rotor 2 so as to apply the brake in the way described above is implemented by a feedforward control for controlling the energization mount to the electric motor 9a and is also implemented additionally by a feedback control based on a measurement signal of an axial force sensor which is provided for this purpose.

In addition, in the case of this embodiment, the lead angle of the worm teeth 28 of the worm 12a of the worm reduction gear 10b is set in the range of 1.5 to 3 degrees. A construction is realized by setting the lead angle in this range in which no rotational movement is transmitted from the worm wheel 13a to the worm 12a by the frictional resistance between tooth flanks of the worm wheel 13a and the worm teeth 28 of the worm 12a. Consequently, the worm reduction gear 10b has irreversibility. Namely, the worm reduction gear 10b has a self-locking function. Because of this, even when the energization to the electric motor 9a is stopped, both the inner and outer pads 4a, 4b can be kept pressed against both the axial side surfaces of the rotor 2 without energizing any portion, thereby making it possible to ensure the braking force without using up a power supply such as a battery.

It should be noted that the worm reduction gear can also be made to have reversibility. However, in this case, a lock construction is separately provided for ensuring the braking force even after the energization to the electric motor 9a has been stopped.

Additionally, in order to cancel the operation of the electric parking brake unit, the electric motor 9a is energized so as to rotate the output shaft 26 of the electric motor 9a in an opposite direction to the direction in which the output shaft 26 is rotated when the electric parking brake unit is in operation (when the braking force is generated) by a sufficient amount to release the braking force. The rotation movement of the output shaft 26 is transmitted to the worm 12a of the worm reduction gear 10b by way of the drive side gearwheel 27 and the driven side gearwheel 29 along the same transmission line as that used when the electric parking brake unit is in operation. Further, the rotational movement of the worm 12a drives to rotate the drive spindle 41 of the feed screw mechanism 39 which makes up the thrust generation mechanism 23 by way of the worm wheel. In this way, the piston 19a is displaced in a direction in which the piston 19a moves away from the rotor 2, whereby both the pads 4a, 4b are separated from the rotor 2.

In the case of the disc brake apparatus 1b with an electric parking brake mechanism of the embodiment that has been described heretofore, the electric motor 9a and the worm 12a are disposed so that the axis L₉ of the output shaft 26 of the electric motor 9a and the axis L₁₂ of the worm 12a are parallel and both the axes L₉, L₁₂ exist on the different imaginary planes which exist in the direction which is orthogonal to the axis L₄₁ of the drive spindle 41 and moreover so that the axial position of the axis Lg of the output shaft 26 of the electric motor 9a and the axial position of the axis L₁₂ of the worm 12a are superposed on each other when seen in the axial direction of the axis L₄₁ of the drive spindle 41. Because of this, the axial dimension of the electric motor 9a and the worm 12a with respect to the caliper 5b can be reduced, and there is caused no such situation that the electric motor 9a and the worm reduction gear 12a are superposed on the axial positions of the pair of guide pins 6a, 6b, thereby making it possible to improve the workability in repair, maintenance and assemblage of the disc brake apparatus to a vehicle and the layout properties thereof.

In addition, the degree of freedom in disposing the electric motor 9a with respect to the radial direction of the worm 12a can be enhanced. Because of this, the layout properties of the disc brake apparatus to avoid the interference with a peripheral component such as a wheel are high. Additionally, the casing of the electric motor can be commonized for cylinders of different sizes.

Further, the position of the center of gravity of the electric motor 9a can be disposed on or near the axis L₄₁ of the drive spindle 41. Namely, the imaginary plane α which is orthogonal to the axis of the electric motor 9a and the axis L₄₁ of the drive spindle 41 can be caused to coincide with each other (the axis L₄₁ is disposed on the imaginary plane α) or the deviation between the imaginary plane α and the axis L₄₁ can be suppressed to a small level at the position of the center of gravity. Because of this, the rotational moment that would be generated around the axis L₄₁ based on vibration during operation or its own weight can be prevented from being applied to the electric motor and the support portion of the electric motor or can be reduced.

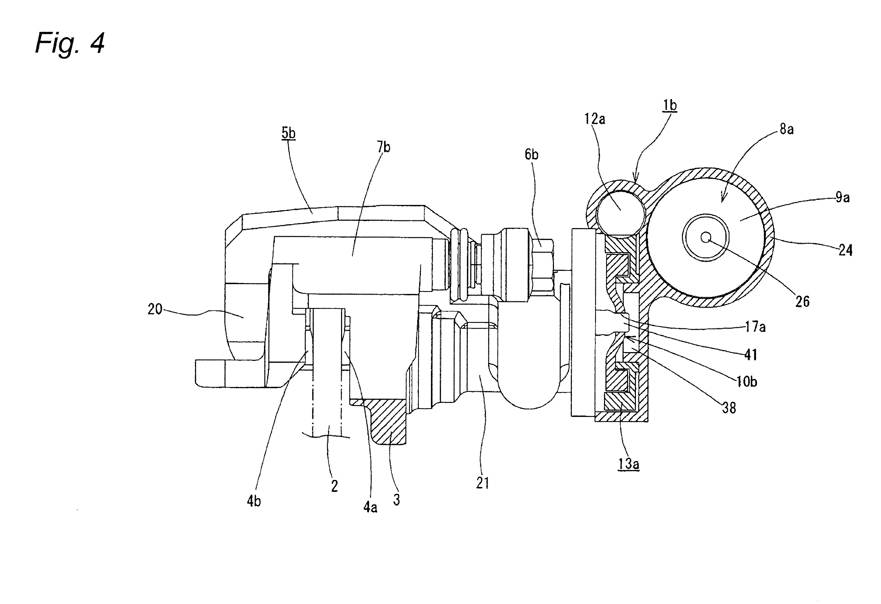

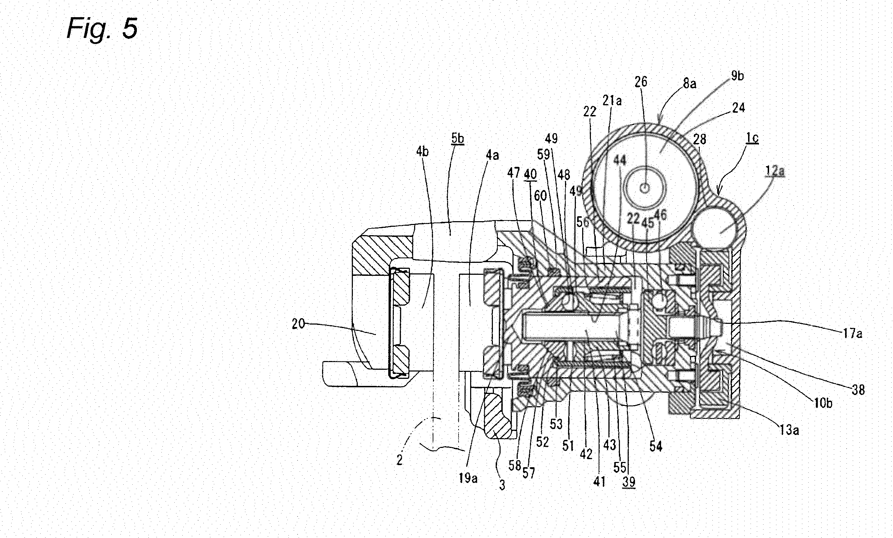

Fig. 5 shows a second embodiment of the invention.
In a disc brake apparatus 1c with an electric parking mechanism of this embodiment, an electric motor 9b is disposed above a cylinder portion 21a of a caliper 5b as seen in Fig. 4.

In the case of the disc brake apparatus 1c with an electric parking mechanism that is configured in the way described above, the position of the center of gravity of the disc brake apparatus 1c in whole can be disposed on the side of a rotor 2. Because of this, a rotational moment that is applied to a support portion of the disc brake apparatus 1c can be reduced, and hence, it is possible to prevent the generation of rattling noise, dragging due to the deterioration in slidability of guide pins 6a, 6b and abnormal wear of brake pads 4a, 4b.

The second embodiment is similar to the first embodiment that has been described above except that the electric motor 9b is disposed differently, and therefore, the illustration and description of like portions will be omitted.

While the invention has been described in detail and by reference to the specific embodiments, it is obvious to those skilled in the art that various alterations or modifications can be made thereto without departing from the spirit, scope or scope of intention of the invention.

The invention is based on Japanese Patent Application (No. 2010-021875) filed on February 3, 2010, the contents of which are incorporated herein by reference.

### Industrial Applicability

While the respective constructions of the embodiments are such that the service brake is operated hydraulically and the parking brake is operated electrically, when carrying out the invention, the construction of the service brake is not limited to the hydraulic construction and hence, an electric construction can also be adopted for the service brake.

### Reference Signs List

- 1, 1a, 1b, 1c: Disc brake apparatus with an electric parking mechanism
- 2: Rotor
- 3: Support
- 4a, 4b: Pad
- 5, 5a, 5b: Caliper
- 6a, 6b: Guide pin
- 7a, 7b: Guide cylindrical portion
- 8, 8a: Electric thrusting unit
- 9, 9a, 9b: Electric motor
- 10, 10a, 10b: Worm reduction gear
- 11: Feed screw mechanism
- 12, 12a: Worm
- 13, 13a: Worm wheel
- 14: Drive spindle
- 15: Nut
- 16: External thread portion
- 17, 17a: Support hole
- 18: Internal thread portion
- 19, 19a: Piston
- 20: Caliper claw
- 21, 21 a: Cylinder portion
- 22: Cylinder space
- 23: Thrust generation mechanism
- 24: Casing
- 25: Motor space
- 26: Output shaft
- 27: Drive side gearwheel
- 28: Worm teeth
- 29: Driven side gearwheel
- 30: Cylindrical portion
- 31: Gearwheel portion
- 32: Worm space
- 33: Support hole
- 34: Sleeve
- 35: Lid member
- 36: Support hole
- 37: Sleeve
- 38: Worm wheel space
- 39: Feed screw mechanism
- 40: Ball-and-ramp mechanism
- 41: Drive spindle
- 42: External thread portion
- 43: Drive side rotor
- 44: Threaded hole
- 45: Collar portion
- 46: Thrust rolling bearing
- 47: Driven side rotor
- 48: Ball
- 49: Drive side ramp portion
- 50: Driven side ramp portion
- 51: Case
- 52: Bent portion
- 53: Locking step portion
- 54: Ring member
- 55: Biasing spring
- 56: Cutout
- 57: Rotor side inclined surface
- 58: Bearing surface
- 59: Locking groove
- 60: Oil ring

## Claims

1. An electric thrusting unit for a disc brake with an electric parking mechanism, comprising:
an electric motor;
a worm reduction gear including a worm and a worm wheel which are meshed with each other; and
a thrust generation mechanism for converting rotational movement transmitted by way of the worm reduction gear into linear movement, wherein
the worm wheel is supported on a part of a rotational member of the thrust generation mechanism concentrically with the rotational member so as to rotate together with the rotational member,
the worm, includes worm teeth which are provided on part thereof in an axial direction, and is supported rotatably inside a casing for the worm reduction gear in a state where the worm teeth are meshed with the worm wheel,
a drive side gearwheel and a driven side gearwheel are brought into meshing engagement with an output shaft of the electric motor directly or by way of an additional gearwheel so as to transmit a rotational force of the output shaft of the electric motor to the worm,
the drive side gearwheel is provided concentrically with the output shaft and so as to rotate together therewith, and
the driven side gearwheel is provided on a part of the worm concentrically with the worm and so as to rotate together therewith.

2. The electric thrusting unit for a disc brake apparatus with an electric parking mechanism according to claim1, wherein
an axis of the output shaft of the electric motor is parallel to an axis of the worm, and
the axis of the output shaft of the electric motor and the axis of the worm exist on a plane which is orthogonal to an axis of the rotational member of the thrust generation mechanism.

3. The electric thrusting unit for a disc brake apparatus with an electric parking mechanism according to claims 1 or 2, wherein
the worm reduction gear is lubricated with a grease, and
a lead angle of the worm teeth of the worm is in a range from 1.5 to 3 degrees.

4. A disc brake apparatus with an electric parking mechanism, comprising:
a rotor which rotates together with a wheel;
a support member which is supported on a portion that does not rotate in a state wherein the support member is disposed adjacent to the rotor;
a pair of pads which are disposed on both sides of the rotor in an axial direction and which are supported by the support member so as to be moved towards and away from the rotor; and
the electric thrusting unit according to any one of claims 1 to 3, which moves the pair of pads in a direction toward the rotor.
